Europäisches Patentamt

European Patent Office

Office européen des brevets

(19)

(11) **EP 1 322 082 A1**

(12) ## EUROPEAN PATENT APPLICATION

(43) Date of publication:
   **25.06.2003 Bulletin 2003/26**

(51) Int Cl.⁷: **H04L 25/06**

(21) Application number: **02004262.8**

(22) Date of filing: **27.02.2002**

(84) Designated Contracting States:
   **AT BE CH CY DE DK ES FI FR GB GR IE IT LI LU
   MC NL PT SE TR**
   Designated Extension States:
   **AL LT LV MK RO SI**

(30) Priority: **21.12.2001 JP 2001390151**

(71) Applicant: **MITSUBISHI DENKI KABUSHIKI
   KAISHA
   Tokyo 100-8310 (JP)**

(72) Inventor: **Hoshide, Takahiro,
   Mitsubishi Denki K. K.
   Tokyo 100-8310 (JP)**

(74) Representative: **Pfenning, Meinig & Partner GbR
   Mozartstrasse 17
   80336 München (DE)**

(54)  **DC bias control circuit for an optical receiver**

(57)     There is provided an optical receiver comprising: a HIGH level detector (11) for detecting a HIGH level of an output signal from a preamplifier (2); a DC level detector (12) for detecting a DC level of the output signal from the preamplifier; a LOW level detector (13) for detecting a LOW level of the output signal from the preamplifier; a first subtracting circuit (14) for determining a first subtraction result by subtracting the DC level from the HIGH level; a second subtracting circuit (15) for determining a second subtraction result by subtracting the LOW level from the DC level; a third subtracting circuit (16) for determining a third subtraction result by subtracting the second subtraction result from the first subtraction result; and a correction circuit (17) for correcting a DC bias applied to an AC component of the output signal from the preamplifier by weighting the third subtraction result according to characteristics of a light receiving element and characteristics of the preamplifier, and by determining a difference between a level of a crossing point of an eye diagram of the output signal from the preamplifier, at which rising and falling edges of pulses included in the output signal from the preamplifier cross each other, and the DC level.

FIG.1

**Description**

BACKGROUND OF THE INVENTION

Field of the Invention

The present invention relates to a DC bias control circuit for, an optical receiver for, and a DC bias control method of reducing the amount of jitter in regenerated data.

Description of the Prior Art

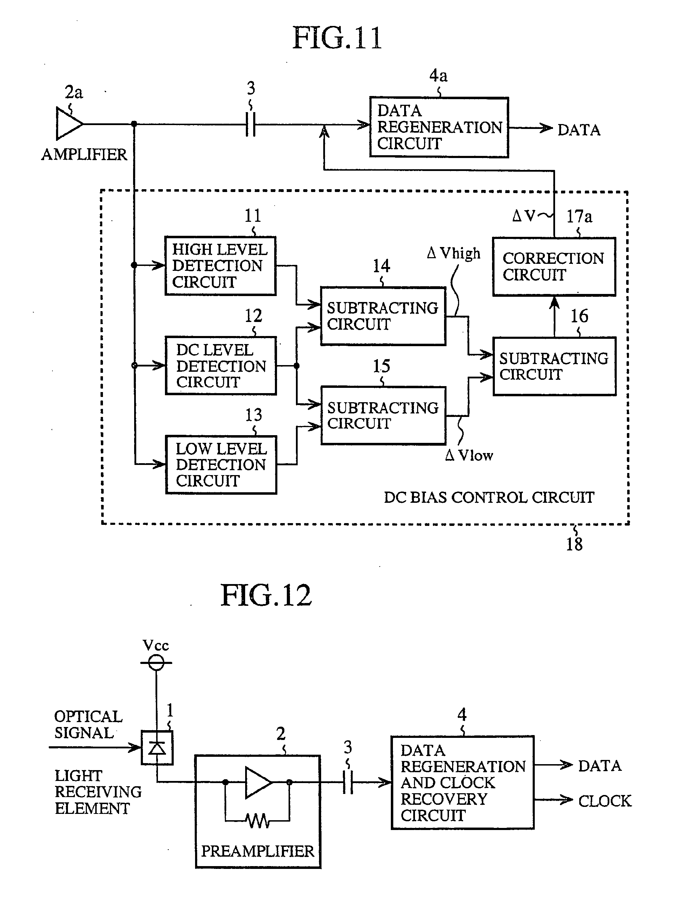

Fig. 12 is a block diagram showing the structure of a prior art optical receiver disclosed in Japanese patent application publication (TOKKAIHEI) No. 11-284572. In the figure, reference numeral 1 denotes a light receiving element for converting an incoming optical signal into an electrical current signal, reference numeral 2 denotes a preamplifier for converting the electrical current signal which flows through the light receiving element 1 into a voltage signal, reference numeral 3 denotes a capacitor for blocking a DC component of the voltage signal from the preamplifier 2 and for allowing an AC component of the voltage signal to pass therethrough, and reference numeral 4 denotes a data regeneration and clock recovery circuit for reshaping and regenerating data from the AC component of the voltage signal which passes through the capacitor 3, and for recovering a clock from the AC component of the voltage signal.

In operation, the light receiving element 1 converts an incoming optical signal into an electrical current signal, and the preamplifier 2 then converts the electrical current signal which flows through the light receiving element 1 into a voltage signal and outputs the voltage signal. When the power of the incoming optical signal grows, a distortion might be generated in the output signal of the preamplifier 2 depending on the characteristics of the light receiving element 1 and the characteristics of the preamplifier 2, and therefore the level of a crossing point (or eye crossing) of an eye diagram of the signal input to the data regeneration and clock recovery circuit 4, at which the rising and falling edges of pulses included in the incoming signal cross each other, might be shifted from the DC level (i.e., the mean level of the incoming signal) upwardly or downwardly.

In general, the data regeneration and clock recovery circuit 4 receives a differential input, and the AC component of the voltage signal from the capacitor 3 to which a DC bias isappliedis input to a normal-phase side of the data regeneration and clock recovery circuit 4 and a threshold voltage used for determining whether the regenerated data is 0 or 1 is supplied to an opposite-phase side of the data regeneration and clock recovery circuit 4. The threshold voltage supplied to the opposite-phase side is equal to the DC bias applied to the normal-phase side.

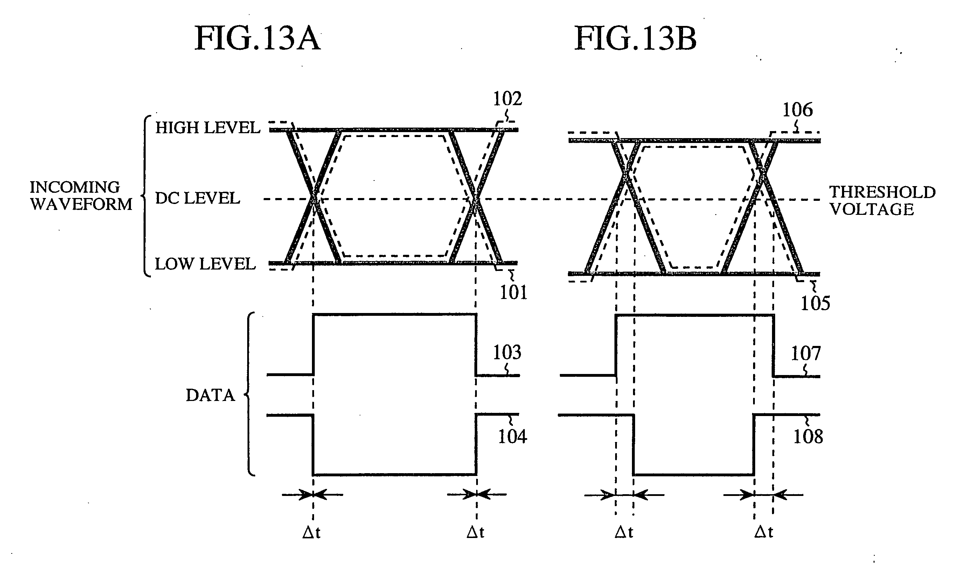

Figs. 13A and 13B are diagrams each showing the waveforms of an incoming optical signal applied to and data regenerated by the data regeneration and clock recovery circuit 4. Fig. 13A shows a case where the input power of the optical signal has a normal level and no distortion is generated in the output signal of the preamplifier 2, and Fig. 13B shows a case where the input power of the optical signal indicates has a large level and a distortion is generated in the output signal of the preamplifier 2.

As shown in Fig. 13A, when no distortion is generated in the output signal of the preamplifier 2 and the output signal has an excellent waveform, the waveform of the output signal can be symmetric with respect to the DC level and the level of the crossing point of the eye diagram of the output signal at which the rising and falling edges of the waveform cross each other corresponds to the mean level of the waveform. Therefore, since the crossing point thus corresponds to the threshold voltage, when a waveform 101 is input to the data regeneration and clock recovery circuit 4, the data regeneration and clock recovery circuit 4 regenerates data having a waveform 103, and when a waveform 102 is input, the data regeneration and clock recovery circuit 4 regenerates data having a waveform 104. As a result, the rising and falling edges of the regenerated data waveform 103 coincide with the falling and rising edges of the regenerated data waveform 104, respectively, and therefore no time difference $\Delta t$ occurs between them and no jitter occurs in the regenerated data.

However, as shown in Fig. 13B, when a distortion is generated in the output signal of the preamplifier 2, if the crossing point of the eye diagram is shifted upwardly, the mean level of the waveform is increased and therefore the entire of the waveform is seemed to be lowered with respect to the DC level. The crossing point of the eye diagram might be shift downwardly according to the characteristic of the preamplifier 2 instead of being shifted upwardly as shown in Fig. 13B. In Fig. 13 B in which the crossing point of the eye diagram is shifted upwardly with respect to the threshold voltage, when a waveform 105 is input to the data regeneration and clock recovery circuit 4, the data regeneration and clock recovery circuit 4 regenerates data having a waveform 107, and when a waveform 106 is input, the data regeneration and clock recovery circuit 4 regenerates data having a waveform 108. As a result, the rising and falling edges of the regenerated data waveform 107 do not coincide with the falling and rising edges of the regenerated data waveform 108, respectively, and therefore a time difference $\Delta t$ occurs between them and jitter occurs in the regenerated data.

A problem with the prior art optical receiver constructed as mentioned above is that when a distortion occurs in a signal input to the data regeneration and clock recovery circuit 4, and therefore the crossing point of an eye diagram of the input signal at which the rising and falling edges of the input signal cross each other is shifted from the mean level of the input signal, jitter can occur in the regenerated data.

SUMMARY OF THE INVENTION

The present invention is proposed to solve the above-mentioned problems, and it is therefore an object of the present invention to provide a DC bias control circuit, an optical receiver, and a DC bias control method capable of reducing the amount of jitter in regenerated data even if a distortion occurs an input signal and therefore the crossing points where the rising and falling edges of two possible waveforms of the signal cross each other are shifted from the mean level of each of the two possible waveforms.

In accordance with an aspect of the present invention, there is provided a DC bias control circuit for controlling a DC bias added to an AC component of an output signal delivered from an amplifier to a data regeneration circuit that regenerates data from the AC component of the output signal from the amplifier based on a predetermined threshold voltage, wherein the DC bias control circuit controls the DC bias based on a HIGH level, a DC level, and a LOW level of the signal output from the amplifier.

In accordance with another aspect of the present invention, the DC bias control circuit comprises: a HIGH level detector for detecting aHIGH level of the output signal from the amplifier; a DC level detector for detecting a DC level of the output signal from the amplifier; a LOW level detector for detecting a LOW level of the output signal from the amplifier; a first subtracting circuit for determining a first subtraction result by subtracting the DC level from the HIGH level; a second subtracting circuit for determining a second subtraction result by subtracting the LOW level from the DC level; a third subtracting circuit for determining a third subtraction result by subtracting the second subtraction result from the first subtraction result; and a correction circuit for correcting the DC bias by weighting the third subtraction result according to characteristics of the amplifier, and by determining a difference between a level of a crossing point of an eye diagram of the output signal from the amplifier, at which rising and falling edges of pulses included in the output signal from the amplifier cross each other, and the DC level.

In accordance with a further aspect of the present invention, there is provided an optical receiver comprising: a light receiving element for converting an incoming optical signal into an electrical current signal; a preamplifier for converting the electrical current signal which flows through the light receiving element into a voltage signal; and a data regeneration and clock recovery circuit for applying a DC bias to an AC component of the voltage signal from the preamplifier, and for reshaping and regenerating data and recovering a clock from the AC component based on a predetermined threshold voltage, wherein the optical receiver controls the DC bias based on a HIGH level, a DC level, and a LOW level of the output signal from the preamplifier.

In accordance with another aspect of the present invention, the optical receiver further comprises: a HIGH level detector for detecting a HIGH level of the output signal from the preamplifier; a DC level detector for detecting a DC level of the output signal from the preamplifier; a LOW level detector for detecting a LOW level of the output signal from the preamplifier; a first subtracting circuit for determining a first subtraction result by subtracting the DC level from the HIGH level; a second subtracting circuit for determining a second subtraction result by subtracting the LOW level from the DC level; a third subtracting circuit for determining a third subtraction result by subtracting the second subtraction result from the first subtraction result; and a correction circuit for correcting the DC bias by weighting the third subtraction result according to characteristics of the light receiving element and characteristics of the amplifier, and by determining a difference between a level of a crossing point of an eye diagram of the output signal from the preamplifier, at which rising and falling edges of pulses included in the output signal from the preamplifier cross each other, and the DC level.

In accordance with a further aspect of the present invention, there is provided a method of controlling a DC bias added to an AC component of an output signal delivered from an amplifier to a data regeneration circuit that regenerates data from the AC component of the output signal from the amplifier based on a predetermined threshold voltage, the method comprising the steps of: detecting a HIGH level of the output signal from the amplifier; detecting a DC level of the output signal from the amplifier; detecting a LOW level of the output signal from the amplifier; determining a first subtraction result by subtracting the DC level from the HIGH level; determining a second subtraction result by subtracting the LOW level from the DC level; determining a third subtraction result by subtracting the second subtraction result from the first subtraction result; and correcting the DC bias by weighting the third subtraction result according to characteristics of the amplifier, and by determining a difference between a level of a crossing point of an eye diagram of the output signal from the amplifier, at which rising and falling edges of pulses included in the output signal from the amplifier cross each other, and the DC level.

Accordingly, the present invention offers an advantage of being able to reduce the amount of jitter in regenerated data.

Further objects and advantages of the present invention will be apparent from the following description of the preferred embodiments of the invention as illustrated in the accompanying drawings.

BRIEF DESCRIPTION OF THE DRAWINGS

Fig. 1 is ablock diagram showing the structure of an optical receiver according to a first embodiment of the present invention;

Fig. 2 is a circuit diagram showing the structure of a High level detection circuit of the optical receiver according to the first embodiment of the present invention;

Fig. 3 is a circuit diagram showing the structure of a Low level detection circuit of the optical receiver according to the first embodiment of the present invention;

Fig. 4A is a block diagram showing the structure of a circuit including the function of the High level detection circuit and the function of the Low level detection circuit in the optical receiver according to the first embodiment of the present invention;

Fig. 4B is a diagram showing a histogram of sampled values of an analog-to-digital converted output signal of a preamplifier of the optical receiver according to the first embodiment of the present invention;

Fig. 5 is a circuit diagram showing the structure of an example of a DC level detection circuit of the optical receiver according to the first embodiment of the present invention;

Fig. 6 is a circuit diagram showing the structure of another example of the DC level detection circuit of the optical receiver according to the first embodiment of the present invention;

Figs. 7A and 7B are diagrams each showing the waveform of a signal input to a data regeneration and clock recovery circuit of the optical receiver according to the first embodiment of the present invention when an output signal of a preamplifier has a distortion;

Fig. 8 is a diagram showing an example of a weighting correction characteristic of a correction circuit of the optical receiver according to the first embodiment of the present invention;

Fig. 9 is a diagram showing a relationship between the weighting correction characteristic of the correction circuit of the optical receiver according to the first embodiment of the present invention and actual characteristics of a light receiving element and the preamplifier;

Fig. 10 is a diagram showing a relationship between the weighting correction characteristic of the correction circuit of the optical receiver according to the first embodiment of the present invention and the actual characteristics of the light receiving element and the preamplifier;

Fig. 11 is a block diagram showing the structure of a DC bias control circuit according to a second embodiment of the present invention;

Fig. 12 is a block diagram showing the structure of a prior art photoreceiver; and

Figs. 13A and 13B are diagrams each showing the waveforms of an input optical signal applied to and data regenerated by a data regeneration and clock recovery circuit of the prior art photoreceiver.

DETAILED DESCRIPTION OF THE PREFERRED EMBODIMENTS

Embodiment 1.

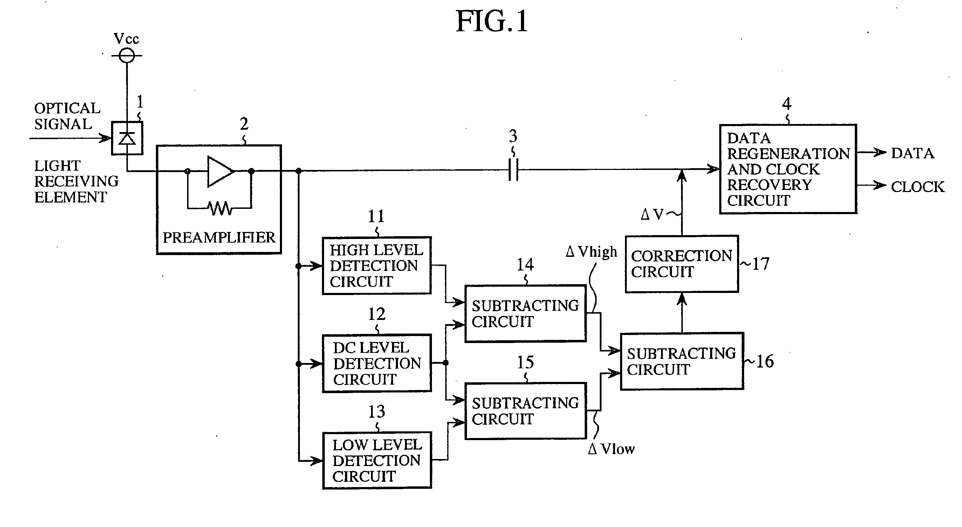

Fig. 1 is a block diagram showing the structure of an optical receiver according to a first embodiment of the present invention. In Fig. 1, a light receiving element 1, a preamplifier 2, a capacitor 3, and an data regeneration and clock recovery circuit 4 have the same structures as those of the prior art optical receiver shown in Fig. 12, respectively. The explanation of those components designated by the same reference numerals will be omitted hereafter. Reference numeral 11 denotes a High level detection circuit for detecting a High level of an output signal output from the preamplifier 2, reference numeral 12 denotes a DC level detection circuit for detecting a DC level of the output signal output from the preamplifier 2, and reference numeral 13 denotes a Low level detection circuit for detecting a Low level of the output signal output from the preamplifier 2.

Furthermore, in Fig. 1, reference numeral 14 denotes a subtracting circuit (first subtracting circuit) for determining a first subtraction result by subtracting the DC level of the output signal detected by the DC level detection circuit 12 from the High level of the output signal detected by the High level detection circuit 11, and reference numeral 15 denotes a subtracting circuit (second subtracting circuit) for determining a second subtraction by subtracting the Low level of the output signal detected by the Low level detection circuit 13 from the DC level of the output signal detected by the DC level detection circuit 12.

In addition, in Fig. 1, reference numeral 16 denotes a subtracting circuit (third subtracting circuit) for determining a third subtraction result by subtracting the second subtraction result determined by the subtracting circuit 15 from the first subtraction result determined by the subtracting circuit 14, and reference numeral 17 denotes a correction circuit for weighting the third subtraction result determined by the subtracting circuit 16 according to characteristics of the light receiving element 1 and characteristics of the preamplifier 2, and for determining a difference $\Delta V$ between the level of a crossing point (or eye crossing) of an eye diagram of the output signal from the preamplifier 2, at which the rising and falling edges of pulses included in the output signal from the preamplifier 2 cross each other, and the DC level, so as to reduce a DC bias applied to a normal-phase side of an input of the data regeneration and clock recovery circuit 4 by only $\Delta V$.

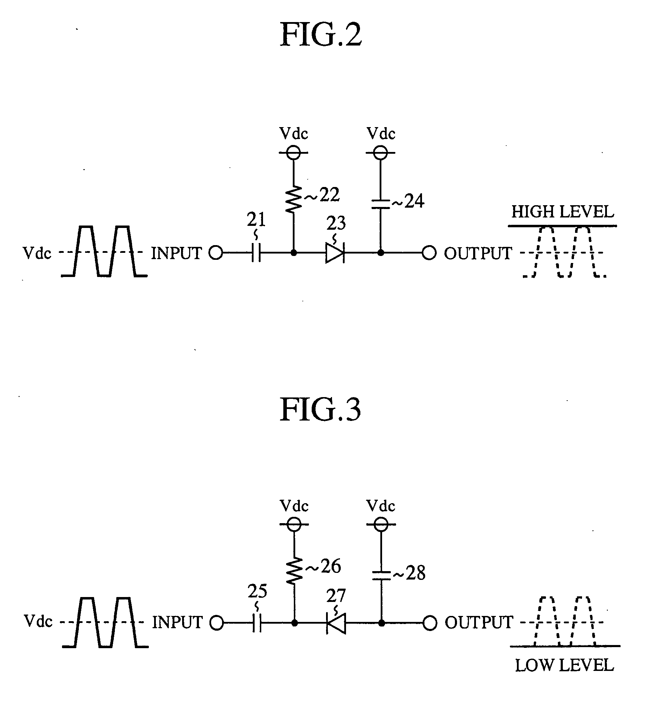

Fig. 2 is a circuit diagram showing the structure of the High level detection circuit 11. The High level detection circuit 11 detects the High level of the output signal of the preamplifier 2 by using a half-wave rectification circuit that consists of a capacitor 21, a resistor 22, a diode 23, and a capacitor 24. Fig. 3 is a circuit diagram showing the structure of the Low level detection circuit 13. The Low level detection circuit 13 detects the Low level of the output signal of the preamplifier 2 by using a half-wave rectification circuit that consists of a capacitor 25, a resistor 26, a diode 27, and a capacitor 28.

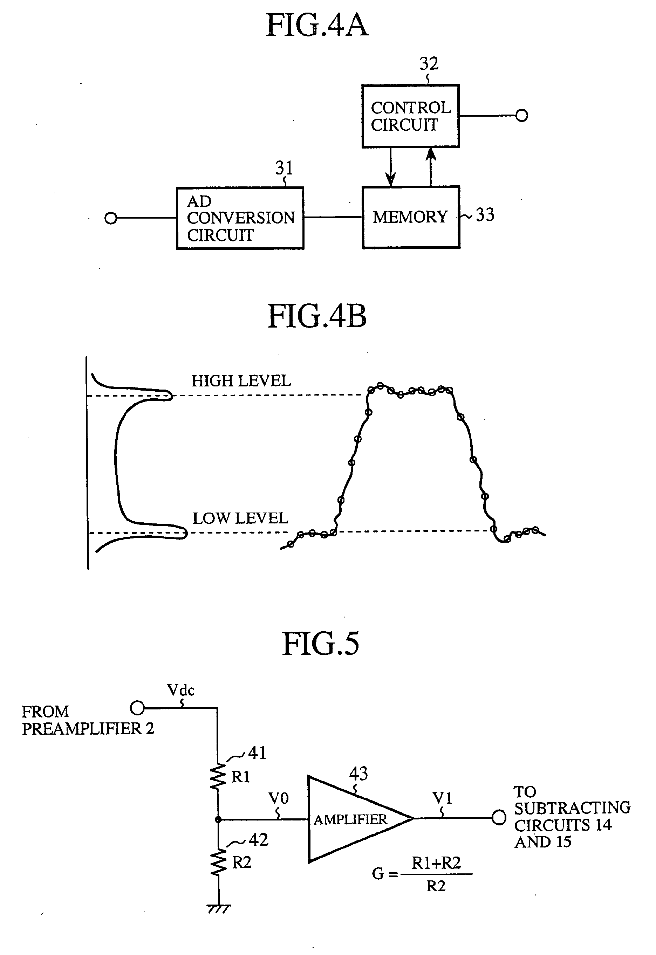

Fig. 4A is a block diagram showing the structure of a circuit including the function of the High level detection circuit 11 and the function of the Low level detection circuit 13. In the figure, reference numeral 31 denotes an AD conversion circuit for converting the output signal from the preamplifier 2 into an equivalent digital value, reference numeral 32 denotes a control circuit for sampling the converted digital value at predetermined intervals determined by sampling pulses applied thereto, and for acquiring a histogram of sampled values so as to determine the level of the largest number of accumulations as the High level or Low level of the output signal, and reference numeral 33 denotes a memory for accumulating and storing the sampled values on a level-by-level basis under control of the control circuit 32.

Fig. 5 is a circuit diagram showing the structure of an example of the DC level detection circuit 12. The DC level detection circuit 12 includes two resistors 41 and 42 for voltage-dividing the output signal of the preamplifier 2 having a DC level of Vdc, and an amplifier 43 for blocking high-frequency components of the voltage-divided output signal and for amplifying low-frequency components of the voltage-divided output signal.

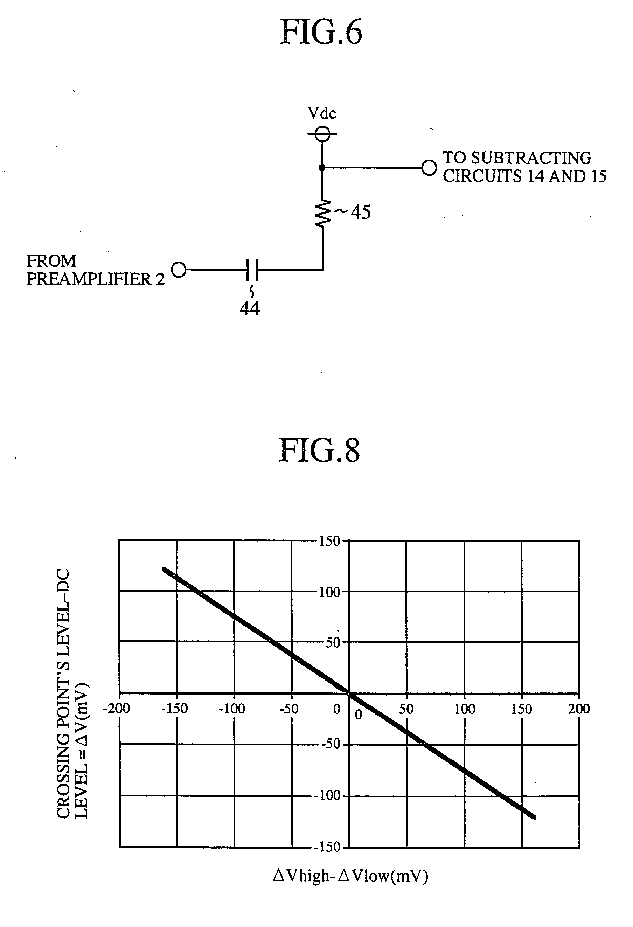

Fig. 6 is a circuit diagram showing the structure of another example of the DC level detection circuit 12. The DC level detection circuit 12 includes a capacitor 44 for blocking DC components of the output signal of the preamplifier 2 and a resistor 45 connected to a power supply having a DC level of Vdc. When using the DC level detection circuit 12 shown in Fig. 6, there is a necessity to use the High level detection circuit 11 shown in Fig. 2 and the Low level detection circuit 13 shown in Fig. 3, they having a common power supply of Vdc.

In operation, the light receiving element 1 and the preamplifier 2 shown in Fig. 1 operate in the same way that those of the prior art photo receiver shown in Fig. 12 do. The High level detection circuit 11 shown in Fig. 2 performs half-wave rectification on the output signal of the preamplifier 2 having a DC level of Vdc, as can be seen from the waveforms of an input and output of the High level detection circuit 11, so as to detect the High level of the output signal of the preamplifier 2.

Similarly, the Low level detection circuit 13 shown in Fig. 3 performs half-wave rectification on the output signal of the preamplifier 2 having a DC level of Vdc, as can be seen from the wave forms of an input and output of the Low level detection circuit 13, so as to detect the Low level of the output signal of the preamplifier 2.

In addition, in the circuit shown in Fig. 4A including the function of the High level detection circuit 11 and the function of the Low level detection circuit 13, the AD conversion circuit 31 converts the output signal from the preamplifier 2 into an equivalent digital value, and the control circuit 32 then samples the converted digital value at predetermined intervals determined by sampling pulses whose repetition rate is greater than a data transmission rate at which data are transmitted, and accumulates and stores sampled values in the memory 33 on a level-by-level basis. The control circuit 32 acquires a histogram of the sampled values accumulated on a level-by-level basis, as shown in Fig. 4B, so as to determine the level of the largest number of accumulations as the High level or Low level of the output signal of the preamplifier 2.

The DC level detection circuit 12 detects the DC level of the output signal of the preamplifier 2. In the DC level detection circuit 12 shown in Fig. 5, the output signal from the preamplifier 2 having a DC level of Vdc is voltage-divided by the resistors 41 and 42 and is then input to the amplifier 43. Assuming that the resistors 41 and 42 have resistance values R1 and R2, respectively, the voltage-divided DC level V0 is given by the following equation (1).

$$V0 = Vdc \times R2/(R1+R2) \hspace{3cm} (1)$$

The voltage-divided DC level V0 is then input to the amplifier 43. The amplifier 43 blocks high-frequency components and amplifies low-frequency components, and has a gain G set to (R1+R2)/R2. Therefore, the output of the amplifier 43 has a voltage V1 given by the following equation (2).

$$V1 = V0 \times G = V0 \times (R1+R2)/R2 \qquad (2)$$

Substituting the above-mentioned equation (1) into the above-mentioned equation (2) yields the output voltage V1 of the amplifier 43 given by the following equation (3).

$$
\begin{aligned}
V1 &= V0 \times (R1+R2)/R2 \\
&= Vdc \times (R2/(R1+R2)) \times ((R1+R2)/R2) \\
&= Vdc \qquad\qquad\qquad (3)
\end{aligned}
$$

In other words, the DC level Vdc of the output signal of the preamplifier 2 is detected.

In the DC level detection circuit 12 shown in Fig. 6, the capacitor 44 blocks the DC level from the preamplifier 2, and a DC level Vdc newly given by a power supply is output from the DC level detection circuit 12 to the subtracting circuits 14 and 15, just as it is. The DC level Vdc from the power supply is equal to the power supply Vdc of the High level detection circuit 11 shown in Fig. 2 and is also equal to the power supply Vdc of the Low level detection circuit 13 shown in Fig. 3.

In Fig. 1, the subtracting circuit 14 subtracts the DC level detected by the DC level detection circuit 12 from the High level detected by the High level detection circuit 1 so as to calculate a voltage difference ΔVhigh between the High level and the DC level, which is the first subtraction result. The subtracting circuit 15 subtracts the Low level detected by the Low level detection circuit 13 from the DC level detected by the DC level detection circuit 12 so as to calculate a voltage difference ΔVlow between the DC level and the Low level, which is the second subtraction result. The subtracting circuit 16 subtracts Δ Vlow which is the second subtraction result from ΔVhigh which is the first subtraction result so as to calculate (ΔVhigh-ΔVlow), which is the third subtraction result.

The correction circuit 17 weights (ΔVhigh-ΔVlow) which is the third subtraction result from the subtracting circuit 16 according to input/output characteristics of the light receiving element 1 and input/output characteristics of the preamplifier 2. The correction circuit 17 then determines a difference ΔV between the level of the crossing point of an eye diagram of the input wave applied to the data regeneration and clock recovery circuit 4, at which the rising and falling edges of pulses included in the input wave cross each other, and the DC level, so as to reduce the DC bias applied to the normal-phase side of the input of the data regeneration and clock recovery circuit 4 by only ΔV. Thus, the level of the crossing point of the eye diagram, at which the rising and falling edges of pulses included in the input wave applied to the data regeneration and clock recovery circuit 4 cross each other, can be matched with the threshold voltage, or the difference between the level of the crossing point and the threshold voltage can be reduced.

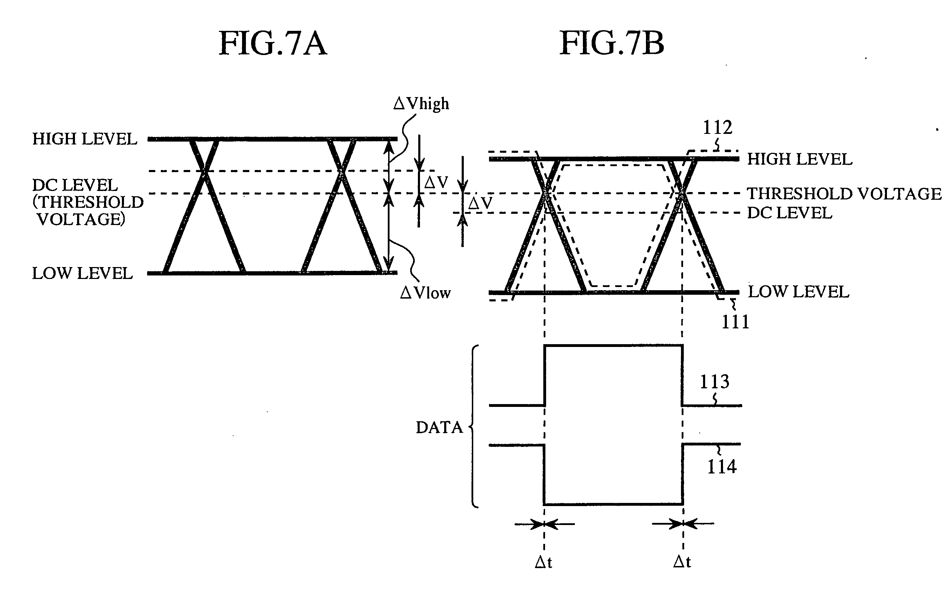

Figs. 7A and 7B are diagrams each showing the waveform of the input of the data regeneration and clock recovery circuit 4 when the output signal of the preamplifier 2 has a distortion. Fig. 7A shows the waveform of the input without correction of the DC bias, and Fig. 7B shows the waveform of the input with correction of the DC bias. When no correction is performed on the DC bias, since there is a difference ΔV between the level of the crossing point and the DC level (i.e. threshold voltage), as shown in Fig. 7A, jitter occurs in the data output from the data regeneration and clock recovery circuit 4, as in the prior art case of Fig. 13B.

On the other hand, as shown in Fig. 7B, the correction circuit 17 can reduce the DC bias applied to the normal-phase side of the input of the data regeneration and clock recovery circuit 4 by only ΔV so as to make the level of the crossing point of the eye diagram of the input wave match with the threshold voltage. Therefore, when a waveform 111 is input to the data regeneration and clock recovery circuit 4, data having a waveform 113 is regenerated by the data regeneration and clock recovery circuit 4. On the other hand, when a waveform 112 is input to the data regeneration and clock recovery circuit 4, data having a waveform 114 is regenerated by the data regeneration and clock recovery circuit 4. As a result, the rising and falling edges of the regenerated data waveform 113 coincide with the falling and rising edges of the regenerated data waveform 114, respectively, and therefore a time difference Δt does not occur between them and no jitter occurs in the regenerated data.

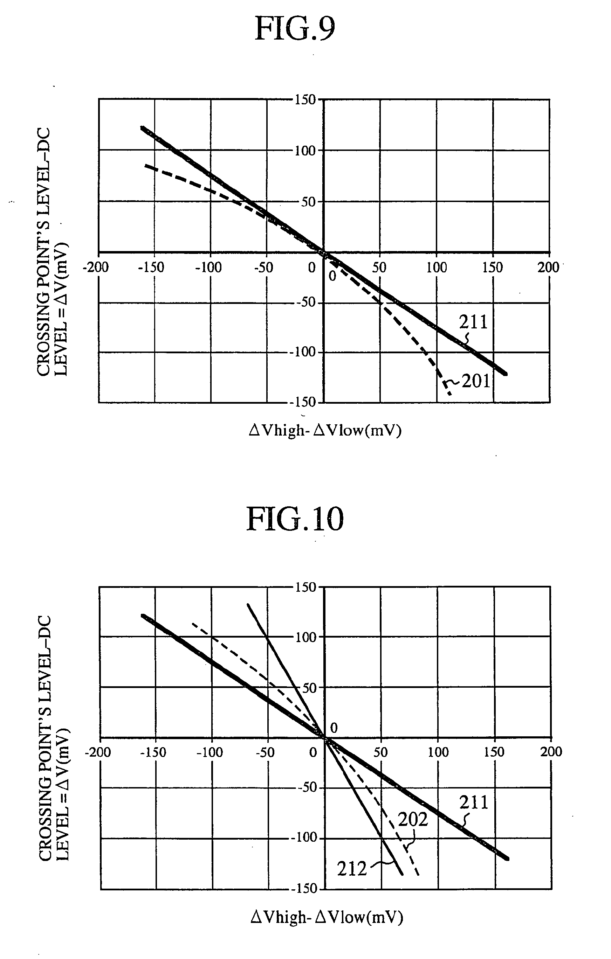

Next, a description will be made as to the weighting which is performed on (ΔVhigh- ΔVlow) according to the input/output characteristics of the light receiving element 1 and the input/output characteristics of the preamplifier 2. Fig. 8 is a diagram showing an example of a weighting correction characteristic of the correction circuit 17, and shows a relationship between (ΔVhigh-ΔVlow) and (the level of the crossing point-DC level = ΔV) when the output signal of the preamplifier 2 has a distortion. In Fig. 8, a region in the positive horizontal axis shows a correction characteristic when the output signal of the preamplifier 2 has a distortion and the level of the crossing point of the eye diagram of the input wave is shifted downwardly, i.e., decreased, and another region in the negative horizontal axis shows a correction characteristic when the output signal of the preamplifier 2 has a distortion and the level of the crossing point of the eye diagram of the input wave is shifted upwardly, i.e., increased.

In the correction characteristic shown in Fig. 8, it is assumed that the duration of each 1-bit data is 400psec, the amplitude of the input wave which is equal to the difference between the High level and the Low level is 400mV, and the rise time and fall time of the input wave are always constant and are 80psec. Furthermore, in Fig. 8, ($\Delta$Vhigh - $\Delta$Vlow) in the horizontal axis is proportional with (the level of the crossing point - DC level = $\Delta$V) in the vertical axis . ($\Delta$Vhigh- $\Delta$ Vlow), which is the third subtraction result from the subtracting circuit 16, is multiplied by a constant value (in this case, -0.75) and the multiplication result is output as $\Delta$V from the correction circuit 17. The DC bias is decreased by only $\Delta$V so that the level of the crossing point is made to match with the threshold voltage of the data regeneration and clock recovery circuit 4.

Fig. 9 is a diagram showing a relationship between the weighting correction characteristic of the correction circuit 17 and ($\Delta$Vhigh - $\Delta$Vlow) - (the level of the crossing point - DC level = $\Delta$V) characteristic of the input wave actually output from the preamplifier 2, which is associated with the characteristics of the light receiving element 1 of the characteristics of the preamplifier 2. In the figure, reference numeral 201 shows a plot representing an example of the characteristic of the input wave actually output from the preamplifier 2, and reference numeral 202 shows a plot representing the weighting correction characteristic of the correction circuit 17 which is the same as that shown in Fig. 8. As shown in Fig. 9, although ($\Delta$Vhigh - $\Delta$Vlow) is not proportional with (the level of the crossing point - DC level = $\Delta$V) in the characteristic of the input wave actually output from the preamplifier 2, the difference between the level of the crossing point and the threshold voltage can be reduced by determining $\Delta$ V according to the weighting correction characteristic plot 211 that approximate the characteristic of the input wave actually output from the preamplifier 2, and therefore the jitter characteristic of the data regenerated when the output signal from the preamplifier 2 has a distortion can be improved.

Fig. 10 is a diagram showing another example of the relationship between the weighting correction characteristic of the correction circuit 17 and ($\Delta$Vhigh - $\Delta$Vlow) - (the level of the crossing point - DC level = $\Delta$V) characteristic of the input wave actually output from the preamplifier 2, which is associated with the characteristics of the light receiving element 1 of the characteristics of the preamplifier 2. In the figure, reference numeral 201 shows a plot representing an example of the characteristic of the input wave actually output from the preamplifier 2, reference numeral 211 shows a plot representing the weighting correction characteristic of the correction circuit 17 which is the same as that shown in Fig. 8, and reference numeral 212 shows a plot representing another weighting correction characteristic of the correction circuit 17.

As shown in Fig. 10, although ($\Delta$Vhigh - $\Delta$Vlow) is not proportional with (the level of the crossing point - DC level = $\Delta$V) in the characteristic of the input wave actually output from the preamplifier 2, the difference between the level of the crossing point and the threshold voltage can be reduced by determining $\Delta$ V according to the weighting correction characteristic plots 211 and 212 that approximate the characteristic of the input wave actually output from the preamplifier 2 (that is, the weighting correction characteristic plot 212 is used in the region in the positive horizontal axis, whereas the other weighting correction characteristics plot 211 is used in the region in the negative horizontal axis) and therefore the jitter characteristic of the data regenerated when the output signal from the preamplifier 2 has a distortion can be improved.

Thus, the best weighting correction characteristic plot is used according to the characteristics of the light receiving element 1 and the characteristics of the preamplifier 2. Furthermore, since ($\Delta$Vhigh - $\Delta$Vlow) and (the level of the crossing point - the DC level) change in proportional with the amplitude of the input wave, respectively, even when the amplitude of the input wave changes, the ratio of ($\Delta$Vhigh - $\Delta$Vlow) and (the level of the crossing point - the DC level) is kept constant regardless of changes in the amplitude of the input wave. Therefore, the improvement of the jitter characteristics can be obtained regardless of the amplitude of the input wave if weighting correction characteristics as shown in Figs. 8 to 10 are provided, for example, according to the characteristics of the light receiving element 1 and the characteristics of the preamplifier 2.

As mentioned above, in accordance with the first embodiment, the optical receiver detects a HIGH level, a DC level, and a LOW level of an output signal from a preamplifier 2, determines a first subtraction result by subtracting the DC level from the HIGH level, determines a second subtraction result by subtracting the LOW level from the DC level, determines a third subtraction result by subtracting the second subtraction result from the first subtraction result, and corrects a DC bias by weighting the third subtraction result according to characteristics of a light receiving element 1 and characteristics of the preamplifier 2, so that the level of a crossing point of an eye diagram of the output signal from the preamplifier, at which the rising and falling edges of pluses included in the output signal cross each other, is made to match with or be close to a threshold voltage, even though the input signal has a distortion and the level of the crossing point is shifted from the mean level of the input waveform. Accordingly, the present embodiment offers an advantage of being able to reduce the amount of jitter in regenerated data.

Embodiment 2.

In the above-mentioned first embodiment, the optical receiver that regenerates data and recovers a clock from an incoming optical signal is explained. The present invention is also applicable to a DC bias control circuit for use with a data regeneration circuit that receives an electrical signal which is similar to an optical signal and that regenerates data from the electrical signal.

Fig. 11 is a block diagram showing the structure of a DC bias control circuit according to a second embodiment of the present invention. In Fig. 11, reference numeral 2a denotes an amplifier for amplifying a signal applied thereto, reference numeral 4a denotes a data regeneration circuit for regenerating data from an output signal of the amplifier 2a based on a predetermined threshold voltage, and reference numeral 17a denotes a correction circuit for weighting a third subtraction result determined by a subtracting circuit 16 according to characteristics of the amplifier 2a, and for determining a difference $\Delta V$ between the level of a crossing point of an eye diagram of the output signal from the amplifier 2a, at which the rising and falling edges of pluses included in the output signal cross each other, and a DC level, so as to reduce a DC bias applied to a normal-phase side of an input of the data regeneration circuit 4a by only $\Delta V$.

Furthermore, in Fig. 11, reference numeral 18 denotes the DC bias control circuit for controlling the DC bias of the signal input to the data regeneration circuit 4a according to the signal output from the amplifier 2a. The DC bias control circuit includes a High level detection circuit 11, a DC level detection circuit 12, a Low level detection circuit 13, a subtracting circuit 14, a subtracting circuit 15, the subtracting circuit 16, and the correction circuit 17a. The other structure of the DC bias control circuit is the same as that of the photo receiver of the first embodiment shown in Fig. 1, and the explanation of the same components designated by the same reference numerals will be omitted hereafter.

In operation, the High level detection circuit 11, the DC level detection circuit 12, and the Low level detection circuit 13 detect the High level, the DC level, and the Low level of the output signal of the amplifier 2a, respectively, like those of the photo receiver of the first embodiment. Furthermore, the subtracting circuit 14, the subtracting circuit 15, and the subtracting circuit 16 also determine the first subtraction result, the second subtraction result, and the third subtraction result, respectively, like those of the photo receiver of the first embodiment.

The correction circuit 17a weights ($\Delta$Vhigh - $\Delta$Vlow) which is the third subtraction result determined by the subtracting circuit 16 according to the input/output characteristics of the amplifier 2a, and then determines the difference $\Delta V$ between the level of the crossing point of the eye diagram of the output signal from the amplifier 2a, at which the rising and falling edges of pluses included in the output signal cross each other, and the DC level, so as to reduce the DC bias applied to the normal-phase side of the input of the data regeneration circuit 4a by only $\Delta V$. Thus, the level of the crossing point of the eye diagram of the output signal from the amplifier 2a, at which the rising and falling edges of pluses included in the output signal cross each other, can be matched with the threshold voltage, or the difference between the level of the crossing point and the threshold voltage can be reduced.

As mentioned above, in accordance with the second embodiment, the DC bias control circuit detects a HIGH level, a DC level, and a LOW level of an output signal from an amplifier 2a, determines a first subtraction result by subtracting the DC level from the HIGH level, determines a second subtraction result by subtracting the LOW level from the DC level, determines a third subtraction result by subtracting the second subtraction result from the first subtraction result, and corrects a DC bias by weighting the third subtraction result according to characteristics of the amplifier 2a, so that the level of a crossing point of an eye diagram of the output signal from the amplifier, at which the rising and falling edges of pluses included in the output signal cross each other, is made to match with or be close to a threshold voltage of a data regeneration circuit 4a, even though the input signal has a distortion and the level of the crossing point is shifted from the mean level of the input waveform. Accordingly, the present embodiment offers an advantage of being able to reduce the amount of jitter in regenerated data.

Manywidely different embodiments of the present invention may be constructed without departing from the spirit and scope of the present invention. It should be understood that the present invention is not limited to the specific embodiments described in the specification, except as defined in the appended claims.

**Claims**

1. A DC bias control circuit for controlling a DC bias added to an AC component of an output signal delivered from an amplifier to a data regeneration circuit that regenerates data from the AC component of the output signal from the amplifier based on a predetermined threshold voltage, wherein said DC bias control circuit controls the DC bias based on a HIGH level, a DC level, and a LOW level of the signal output from the amplifier.

2. The DC bias control circuit according to Claim 1, comprising: a HIGH level detector for detecting a HIGH level of the output signal from the amplifier; a DC level detector for detecting a DC level of the output signal from the amplifier; a LOW level detector for detecting a LOW level of the output signal from the amplifier; a first subtracting circuit for determining a first subtraction result by subtracting the DC level from the HIGH level; a second subtracting circuit for determining a second subtraction result by subtracting the LOW level from the DC level; a third subtracting circuit for determining a third subtraction result by subtracting the second subtraction result from the first subtraction result; and a correction circuit for correcting the DC bias by weighting the third subtraction result according to characteristics of the amplifier, and by determining a difference between a level of a crossing point of an eye diagram of the output signal from the amplifier, at which rising and falling edges of pulses included in the output signal from the amplifier cross each other, and the DC level.

**3.** An optical receiver comprising:

a light receiving element for converting an incoming optical signal into an electrical current signal;
a preamplifier for converting the electrical current signal which flows through the light receiving element into a voltage signal; and
a data regeneration and clock recovery circuit for applying a DC bias to an AC component of the voltage signal from the preamplifier, and for reshaping and regenerating data and recovering a clock from the AC component based on a predetermined threshold voltage, wherein said optical receiver controls the DC bias based on a HIGH level, a DC level, and a LOW level of the output signal from the preamplifier.

**4.** The optical receiver according to Claim 3, comprising:

a HIGH level detector for detecting a HIGH level of the output signal from the preamplifier; a DC level detector for detecting a DC level of the output signal from the preamplifier; a LOW level detector for detecting a LOW level of the output signal from the preamplifier; a first subtracting circuit for determining a first subtraction result by subtracting the DC level from the HIGH level; a second subtracting circuit for determining a second subtraction result by subtracting the LOW level from the DC level; a third subtracting circuit for determining a third subtraction result by subtracting the second subtraction result from the first subtraction result; and a correction circuit for correcting the DC bias by weighting the third subtraction result according to characteristics of the light receiving element and characteristics of the amplifier, and by determining a difference between a level of a crossing point of an eye diagram of the output signal from the preamplifier, at which rising and falling edges of pulses included in the output signal from the preamplifier cross each other, and the DC level.

**5.** A method of controlling a DC bias added to an AC component of an output signal delivered from an amplifier to a data regeneration circuit that regenerates data from the AC component of the output signal from the amplifier based on a predetermined threshold voltage, said method comprising the steps of:

detecting a HIGH level of the output signal from the amplifier;
detecting a DC level of the output signal from the amplifier;
detecting a LOW level of the output signal from the amplifier;
determining a first subtraction result by subtracting the DC level from the HIGH level;
determining a second subtraction result by subtracting the LOW level from the DC level;
determining a third subtraction result by subtracting the second subtraction result from the first subtraction result; and
correcting the DC bias by weighting the third subtraction result according to characteristics of the amplifier, and by determining a difference between a level of a crossing point of an eye diagram of the output signal from the amplifier, at which rising and falling edges of pulses included in the output signal from the amplifier cross each other, and the DC level.

# FIG.1

EP 1 322 082 A1

# FIG.2

# FIG.3

## FIG.4A

## FIG.4B

## FIG.5

$$G = \frac{R1+R2}{R2}$$

# FIG.6

Vdc

TO SUBTRACTING
CIRCUITS 14 AND 15

~45

FROM
PREAMPLIFIER 2

44

# FIG.8

CROSSING POINT'S LEVEL–DC
LEVEL = ΔV(mV)

150

100

50

-200    -150    -100    -50    0    50    100    150    200

0

-50

-100

-150

ΔVhigh-ΔVlow(mV)

# FIG.7A

# FIG.7B

$\Delta$Vhigh

HIGH LEVEL

DC LEVEL
(THRESHOLD
VOLTAGE)

LOW LEVEL

$\Delta$V

$\Delta$Vlow

112

HIGH LEVEL

THRESHOLD VOLTAGE

$\Delta$V

DC LEVEL

LOW LEVEL

111

113

DATA

114

$\Delta$t

$\Delta$t

EP 1 322 082 A1

# FIG.9

CROSSING POINT'S LEVEL−DC
LEVEL = ΔV(mV)

211

201

ΔVhigh-ΔVlow(mV)

# FIG.10

CROSSING POINT'S LEVEL−DC
LEVEL = ΔV(mV)

211

202

212

ΔVhigh-ΔVlow(mV)

## FIG.11

- 2a AMPLIFIER
- 3
- 4a DATA REGENERATION CIRCUIT → DATA
- 11 HIGH LEVEL DETECTION CIRCUIT
- 12 DC LEVEL DETECTION CIRCUIT
- 13 LOW LEVEL DETECTION CIRCUIT
- 14 SUBTRACTING CIRCUIT
- 15 SUBTRACTING CIRCUIT
- 16 SUBTRACTING CIRCUIT
- 17a CORRECTION CIRCUIT
- ΔV
- ΔVhigh
- ΔVlow
- DC BIAS CONTROL CIRCUIT
- 18

## FIG.12

- Vcc
- OPTICAL SIGNAL
- 1 LIGHT RECEIVING ELEMENT
- 2 PREAMPLIFIER
- 3
- 4 DATA REGENERATION AND CLOCK RECOVERY CIRCUIT → DATA, CLOCK

FIG.13A   FIG.13B

EP 1 322 082 A1

**European Patent Office**

## EUROPEAN SEARCH REPORT

Application Number

EP 02 00 4262

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 117 215 A (NIPPON ELECTRIC CO) 18 July 2001 (2001-07-18) * abstract * * paragraph '0001! * * paragraph '0009! * * paragraph '0040! * * claim 5 * * figure 19 * | 1,3 | H04L25/06 |
| A | ----- | 2,4,5 | |

TECHNICAL FIELDS SEARCHED (Int.Cl.7)

H04L

The present search report has been drawn up for all claims

| Place of search | Date of completion of the search | Examiner |
|---|---|---|
| THE HAGUE | 24 July 2002 | Reilly, D |

EPO FORM 1503 03.82 (P04C01)

**ANNEX TO THE EUROPEAN SEARCH REPORT
ON EUROPEAN PATENT APPLICATION NO.**                       EP 02 00 4262

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2002

| Patent document cited in search report | Publication date | Patent family member(s) | Publication date |
|---|---|---|---|
| EP 1117215 A | 18-07-2001 | EP 1117215 A2<br>JP 2002141956 A<br>US 6420962 B1 | 18-07-2001<br>17-05-2002<br>16-07-2002 |

EPO FORM P0459